# EUROPEAN PATENT APPLICATION

(11) **EP 1 882 422 A1**
(43) Date of publication of application: **30.01.2008**
(21) Application number: 07380129.2
(22) Date of filing: 09.05.2007
(51) Int. Cl.: A43B 13/40, A43B 7/08, B29D 31/515

(54) **Insole for footwear**

(30) Priority: 27.07.2006 ES 200602024
(71) Applicant: Calzados Hergar, S.A., E-26580 Arnedo, (La Rioja) (ES)
(72) Inventor: Garcia-Pérez Aradros, Basilio, 26580 Arnedo La Rioja (ES)
(74) Representative: Grimau Muñoz, Julián

(57) **Abstract**

The invention relates to an insole having the peculiarity of incorporating a wide window (2) in correspondence with the area of the sole, which window is intended to be filled by an elastic material part (3) with many perforations or holes (4), applying this elastic part (3) in an injection molding process on the mentioned window (2), providing the insole, and the assembly of the footwear in which it is applied, with greater elasticity, comfort and ventilation.

## Description

### OBJECT OF THE INVENTION

The present invention relates to an insole for footwear which is provided to be applied between the outsole of the footwear in which it is applied and the sole located inside of said footwear and on which the user's foot directly rests. The insole has the peculiarity of having the area of the sole corresponding to said insole provided with a wide window which is filled with a multi-perforated elastic material part, aiming to provide optimal features of elasticity, comfort and ventilation to the footwear assembly.

### BACKGROUND OF THE INVENTION

It is a fact that footwear is manufactured with an increasingly greater degree of comfort, either by using different types of materials, or by having different types of outsole, insoles, uppers, etc.

It is known that one of the most important elements in footwear, besides the bottom or outsole and the corresponding upper, is the corresponding insole, i.e. the part which is intercalated between the bottom or outsole and the sole which is incorporated inside the footwear.

Specifically, insoles tend to have from the area of the waist to the rear end of the heel a stiffness which is determined not only by the nature of the material forming the insole, but also by the so called shank incorporated by them, providing more or less elasticity to the sole thereof.

There is footwear which is comfortable and even self-ventilated with padded chambers, being either pneumatic chambers, of an elastic material, such as foam, etc., such that in their efforts to achieve the most optimal footwear for the user, each manufacturer constantly conducts research to develop different types of insoles, as well as arranging different outsoles, or different soles, different uppers, etc., i.e. each and every one of the parts integrating the footwear is researched to achieve the maximum comfort thereof combined with elasticity and, if possible, ventilation.

To that effect, Spanish Utility Model U 200400736 describes a self-ventilated ergonomic footwear which includes an outsole or bottom with grooves on both its upper and lower sides, alternating in relation to one another, providing the outsole with high elasticity, complementing the footwear with the corresponding upper and insole.

In this utility model, besides the characteristic previously mentioned sole, it incorporates an air chamber between the insole and outsole which is closed at the upper part by an elastic sheet located under the insole, the sheet of which has holes allowing the self-ventilation of the footwear in which, as is obvious, several components are involved, each of which, with its features, definitively giving rise to the fact that the complete composition of the footwear has a high cost, regardless of the fact that the elasticity thereof is determined by the elasticity provided by the grooves made in the outsole, since the insole or the sheet incorporated under it does not have any other feature than having holes for the passage of air, i.e. to achieve the self-ventilation effect.

### DESCRIPTION OF THE INVENTION

The insole was designed to solve the aforementioned drawbacks, in other words, to be applied in footwear and provide optimal properties of comfort, elasticity and ventilation, which as a whole will result in great comfort for the user.

More specifically the insole of the invention, as a part to be placed between the outsole and the inner sole of the footwear, has the peculiarity of being provided, in correspondence with the area of its sole, with a wide window, which mainly affects said sole, in the window of which, and through an injection molding process, an elastic material part is applied, which can be an elastomeric material or another similar material, provided with holes and which is integrated in said window of the insole forming a single body with it and providing the insole in said area with high elasticity, ventilation and, furthermore, comfort for the user.

A sheet of suitable material can be incorporated on the lower side of the insole and precisely in correspondence with the window with which it initially incorporates, which sheet of suitable material will be useful as a support for the injected material which will form the part with holes that will fill the mentioned window of the insole, such that depending on the material which this supporting part is made from, such part can be subsequently removed or can be kept in the assembly of the insole.

On the other hand, it must be stressed that grooves can be carried out in correspondence with the corners or front ends of the window of the insole which could be filled with elastic material in order to improve the integration and reduce the perimetral stiffness caused by the supporting elastic material part filling the window.

It has also been provided such that there can even be grooves such as those previously mentioned in the side areas, which grooves will likewise reduce the stiffness of the perimetral contour of the window.

In relation to the perforations of the elastic material part, which is applied through injection molding in the window of the insole, it must be stressed that the holes can be carried out with different criteria and preferably with a lower density of holes in the areas of greater pressure, and a higher density of holes in the rest, with the object of achieving an optimal deformability upon tensing such elastic part when it is part of the insole, and logically in its use and application in the corresponding footwear.

### DESCRIPTION OF THE DRAWINGS

To complement the description being made and for the purpose of aiding to better understand the features of the invention according to a preferred practical embodiment thereof, a set of drawings is enclosed as an integral part of said description in which the following has been represented with an illustrative and non-limiting character:

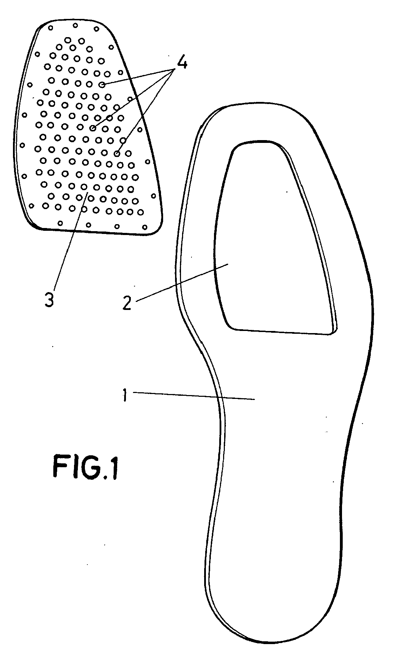

Figure 1 shows an exploded view of an insole with the window carried out therein and the corresponding part which will fill this window and which is applied to it through an injection molding process.

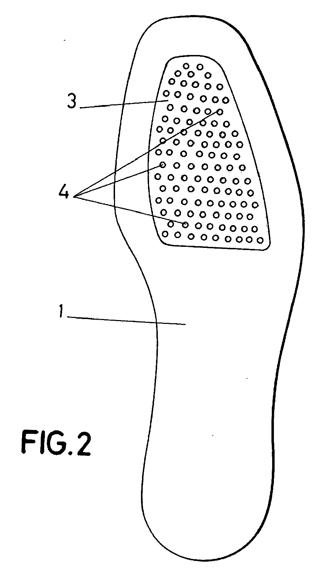

Figure 2 shows a plan view of the insole represented in the previous figure, incorporating the multi-perforated elastic part filling the corresponding window.

### PREFERRED EMBODIMENT OF THE INVENTION

As can be seen in the discussed figures, the insole of the invention is formed by a body (1) made of a suitable material which, in correspondence with the area of the sole, incorporates a wide window filling most of said area of the sole, such that in an injection molding process, this window (2) is filled with an elastic material part (3) with many perforations (4), providing the insole, and therefore the assembly of the sole of the footwear in which it is applied, with elasticity, comfort and ventilation, having provided that the insole (1) can incorporate, before the injection molding process carried out on the part (3), a sheet perimetrically fixed to such window (2) and forming a supporting means for the elastic material which will form this part (3) in the previously mentioned injection molding process, such that this supporting sheet, which is equally formed by an elastic material, can be permanently kept with the assembly of the insole (1) or can be removed once the elastic part (3) is assembled with the corresponding perforations (4).

## Claims

1. An insole for footwear, being formed by a part made of a suitable material and incorporated between the corresponding outsole or bottom of footwear and the inner sole thereof on which the user's foot will rest, **characterized in that** a wide window (2) mainly incorporated in said area of the sole has been provided in correspondence with the area of the sole of the insole (1), which window (2) is filled by an elastic material part (3) with a plurality of perforations (4), which is arranged filling the window (2) in an injection molding process carried out with the elastic material.

2. An insole for footwear according to claim 1, **characterized in that** the insole (1) can incorporate a sheet in correspondence with the window (2) and in the perimeter thereof, being useful as supporting means for the material which will form the elastic part (3) with multiple perforations (4) in the injection molding process of the latter.

3. An insole for footwear according to previous claims, **characterized in that** the front corners the window (2) and even its sides can optionally incorporate grooves which are filled with the material of the elastic part (3) to reduce the perimetral fixing stiffness of the optional supporting sheet.

4. An insole for footwear according to claim 1, **characterized in that** the areas of the part (3) subjected to greater pressure have a lower density of perforations or holes (4), whereas the areas subjected to less pressure have a higher density of holes (4).
